# EUROPEAN PATENT APPLICATION

(11) **EP 1 057 393 A1**
(43) Date of publication of application: **06.12.2000**
(21) Application number: 00201977.6
(22) Date of filing: 05.06.2000
(51) Int. Cl.: A01B 59/048, A01B 49/06, A01B 29/06, A01C 7/10, A01C 15/00, A01C 15/12

(54) **Installation and method for spreading manure**

(30) Priority: 04.06.1999 NL 1012242
(71) Applicant: Claassen, Petrus Antonius Laurentius Jozef, 4758 TP Standdaarbuiten (NL)
(72) Inventor: Claassen, Petrus Antonius Laurentius Jozef, 4758 TP Standdaarbuiten (NL); Withagen, Henricus Petrus Maria, 4731 MN Oudenbosch (NL)
(74) Representative: Jorritsma, Ruurd

(57) **Abstract**

The present invention relates to an installation (1) for spreading manure over the ground, comprising a vehicle (2), such as a tractor, and a manure spreader (3) provided with the container (32) for manure and means (33) for transporting the manure, wherein the installation (1) is provided with wheels (21, 22, 31) over its entire width, the various features being such that the installation (1), in use, exerts a uniform pressure on the soil. What is achieved by means of the present invention is accurate metering, especially in small quantities, onto the seed bed. The metering has no consequence for the structure of the soil. Leaching out of the nutrients such as nitrogen can be restricted according to the invention.

## Description

The invention relates to an installation for spreading manure over the ground, comprising a vehicle, such as a tractor, and a manure spreader provided with a container for manure and means for transporting the manure.

Such an installation is known in arable farming. The known installation is used, inter alia, for spreading animal manure, such as solid poultry manure or compost and the like, over arable land.

In the state of the art it is customary to spread the manure over the land in the autumn, after harvesting. The land is then ploughed up, the manure being worked into the land with the aid of the plough. Spreading of the manure thus takes place in autumn, whilst the new crop is not planted until the spring.

The manure is distributed over the land as early as the autumn because the known installations for spreading manure are relatively heavy. Arable land is compacted by the heavy weight of the machines. The more the land is compacted, the more difficult it is for the roots of the plants to find a way through the arable land and the smaller will be the root system of the plants. Compaction of arable land thus has an adverse effect on the yield to be achieved from the land. In order to prevent compaction of arable land as far as possible, the manure must be applied before the land is ploughed. After ploughing, driving over the land with heavy machinery must be avoided as far as possible.

As a result of the relatively long time span between spreading the manure in the autumn and planting the new crop in the spring, many nutrients are lost from the manure. These nutrients can no longer be taken up by the newly planted crop in the spring and consequently are not utilised for growth of the plants. A first cause of this loss is the fact that nutrients, such as nitrogen, are 'leached' out of arable land by the rain. In this way these nutrients pass into the groundwater and surface water and are inaccessible to the plants. The soil itself will also take up some of the nutrients. In this context consideration can be given to animals such as worms which take up some of the nutrients from the manure and make these inaccessible to the plants.

A first aim of the invention is to provide an installation of the type mentioned in the preamble which makes it possible to spread and to meter manure on agricultural land of all types in the quantity which the crop needs. With this procedure the manure is spread in that layer of the ground in which the seed is also planted, as a result of which the manure is introduced into the ground in the vicinity of the seed. The manure is preferably applied at the same time as the seed bed is prepared, the disadvantages described above being prevented as far as possible.

Said aim is achieved in that the installation is provided with wheels over its entire width, the various features being such that the installation exerts, in use, a uniform pressure on the soil. The installation can, for example, be provided with wheels on which pneumatic tyres with a relatively large tread have been fitted. With this arrangement the pneumatic tyres can have been fitted such that that part of the land over which the installation travels is uniformly loaded over the entire width of the installation. Bedding down of the ground can be restricted by means of, on the one hand, a large contact surface between the tyres and the soil and, on the other hand, as low as possible a weight of the installation.

According to the invention it is possible for the manure spreader to be provided with a chassis with wheels, the wheels of the manure spreader, when viewed in the longitudinal direction of the installation, being positioned between the wheels of the vehicle. The manure spreader can, for example, be coupled to a standard tractor. The support for the manure spreader can be so constructed that this support bridges the distance between the tyres of the tractor. What is achieved by means of this measure is that the installation is supported over the entire width by the tyres. The load which the installation exerts on the land is thus distributed over a relatively large area and, moreover, uniformly over the surface of the land. By this means local compaction of the arable land and differences in compaction in the arable land are restricted to a minimum.

It is also possible for the manure spreader to be connected to the vehicle with the aid of lifting means. As a result of this measure, the pressure which is exerted by the support on the arable land can be controlled using the lifting means. If, for example, the container for the manure is completely full the pressure of the manure spreader on the soil will be relatively high. The manure spreader can be lifted to some extent so that the load on the wheels of the manure spreader will decrease and the load on the wheels of the vehicle will increase. As the container for the manure empties, the wheel load of the manure spreader and the vehicle can thus be kept in balance with the aid of the lifting device.

It is advantageous that the installation comprises means for determining the weight of the manure spreader. In this context it is advantageous that the weighing means are housed in the lifting means and that the installation is provided with means for determining the distance travelled. As a result of these measures a user can accurately keep track of how much manure he has applied to the land per square metre. The weight of the manure spreader can be determined continuously or periodically and by means of the determination of the distance travelled it is possible to calculate the amount of manure that has been applied to the land per square metre.

Furthermore, it is possible for the means for transporting the manure to comprise a conveyor belt which extends from a take-up end, which is located in the container for the manure, to a discharge end. With this arrangement it is possible for the conveyor belt to extend over essentially the entire width of the manure spreader. By making the conveyor belt relatively broad, the manure is uniformly distributed.

According to the invention it is possible for the discharge end of the conveyor belt to adjoin a chute. In use, the manure can be guided in the direction of the soil by means of the chute. If the chute essentially continues to just above the soil, the manure emerges from the installation very close to the soil. Consequently, the installation is less sensitive to the effects of weather, such as rain and wind.

To achieve uniform distribution of the manure over the land it is advantageous that the installation includes a metering roller, which is positioned close to the conveyor belt, the distance between the metering roller and the surface of the conveyor belt being adjustable. This metering roller is able to restrict the quantity of manure that is carried up by the conveyor belt, for example by brushing excess manure carried up off the conveyor belt. In order to obtain the correct operation, the direction of movement of the metering roller can be chosen to be opposed to the direction of movement of the conveyor belt.

Furthermore, it is possible for the installation to include means for making the soil ready for sowing, which means, viewed in the direction of travel of the vehicle, are located downstream of the manure spreader. What is achieved by means of this measure is that the manure which is distributed on the soil at the front of the vehicle is worked into the soil with the aid of the means for making the soil ready for sowing. This working in is desirable in order to distribute the manure through the seed-bed as well as possible. In this way the manure substances are distributed in the uppermost layer of the soil, around the seeds sown in the soil.

In addition to an installation for spreading the manure, the invention also provides a method for spreading manure over arable land with the aid of an installation.

The method is characterised in that the arable land is essentially uniformly loaded during spreading of the manure. This uniform loading means that if the ground is compacted by the machine, this compaction will in any event be uniform. Differences in the growth and the rate of growth of the crop are thus prevented. This compaction is so slight that the roots of the crop are able to grow through the ground without any hindrance.

According to the invention it is also possible for the manure to be spread over the arable land while making the arable land ready for sowing. The effect of this measure is that the manure can be spread over arable land in a single treatment operation during a procedure, making ready for sowing, which has to be carried out in any case.

The invention will be further explained with reference to drawings, in which:

Figure 1 shows a side view of a possible embodiment of the installation for spreading manure according to the invention.

Figure 2 shows a plan view of the installation according to Figure 1.

Figure 3 shows a sectional side view of the manure spreader according to the invention.

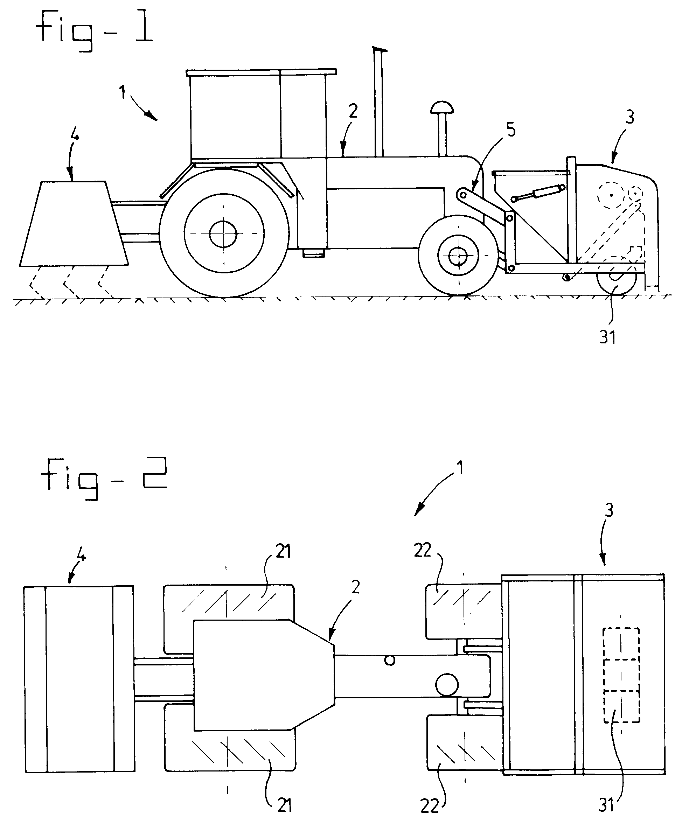

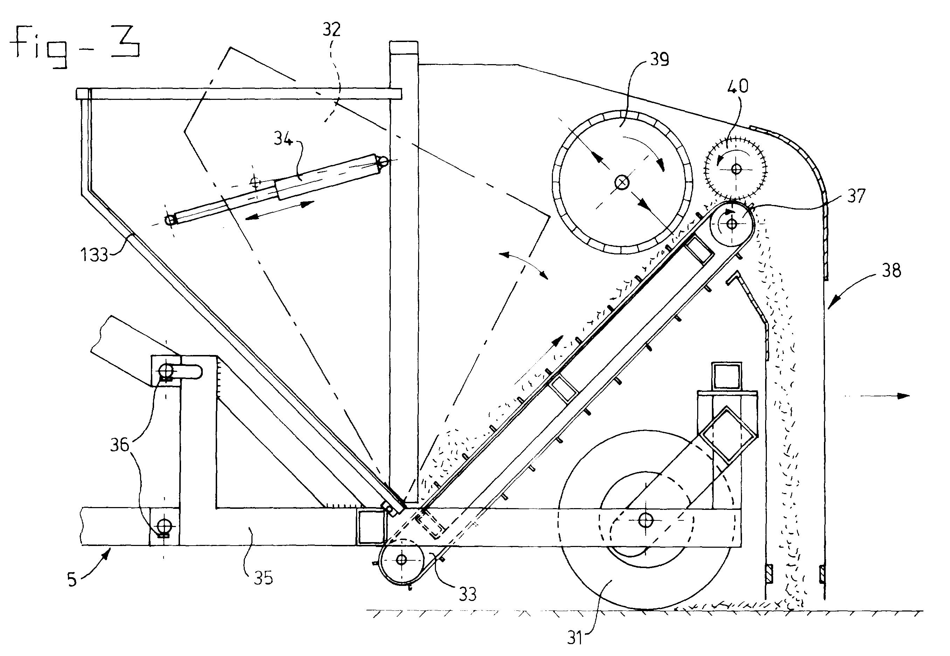

Figure 1 shows an installation 1 for spreading manure. With the aid of the installation 1 according to the invention it is possible to spread the manure accurately over agricultural land. The installation 1 could therefore also be termed a "manure metering device" instead of a "manure spreader". The installation 1 comprises a vehicle, such as a tractor 2. The vehicle is provided at the front with a manure spreader 3 and at the rear with means 4 for ploughing up the land. The manure spreader 3 is attached to the vehicle 2 with the aid of a lift mechanism 5. At the bottom, the manure spreader 3 is provided with wheels, on which tyres 31 have been fitted. Said wheels 31 are provided with relatively broad tyres in which a low pressure is maintained. The tyres have, for example, a width of 1.5 metres, the pressure in the tyres being maintained at, for example, 0.5 bar. As a result of the presence of the relatively broad tyres under the manure spreader 3, the weight thereof, in use, will be distributed over a relatively wide strip of land. The construction and the functioning of the manure spreader 3 will be discussed in detail with reference to Figure 3.

Figure 2 shows a plan view of the installation 1 according to Figure 1. It can be seen from Figure 2 that the joint width of the tyres 31 corresponds to the distance between, respectively, the tyres 21 and 22 of the vehicle 2. With this arrangement the tyres 21, 22 and 31 are fitted under the installation 1 in such a way that the ground over which the installation 1 is driven is loaded over the entire width of the installation 1. Firstly, this has the effect that the weight of the installation 1 can be distributed over a relatively large surface area, so that the loading per square metre can be kept relatively low. Secondly, it is possible to prevent differences arising in the degree of bedding in or compaction of the ground because the pressure which the tyres 21, 22 and 31, respectively, exert on the earth can be controlled with the aid of the lift mechanism 5. As has already been indicated above, the pressure of the manure spreader 3 on the soil will be relatively high when the manure spreader 3 is completely full. The manure spreader can be raised somewhat, so that the load on the wheels of the manure spreader will decrease and the load on the wheels of the vehicle will increase. As the container for the manure empties, the wheel load of the manure spreader and the vehicle can thus be kept in balance with the aid of the lifting device.

Figure 3 shows a possible embodiment of the manure spreader 3. The spreader comprises a container 32 to accommodate the manure to be spread. The container 32 adjoins a conveyor belt 33, with the aid of which the manure is taken up from the container 32. The container 32 has a movable wall 133. By moving this wall 133 the manure is forced in the direction of the conveyor belt, irrespective of the stock currently present in the container 32. The wall 133 can, for example, be moved with the aid of a cylinder 34.

The bottom of the container 32 is supported by a frame 35. This frame 35 is connected at a first end, on the left in the drawing, to the lift mechanism 5. Measurement means, such as sensors 36, can be mounted in the connection between the frame and the lift mechanism. These measurement means can be connected to a display screen (not shown) in the vehicle. As a result of the presence of the measurement means, the weight of the manure spreader can be determined continuously or instantaneously. A user can, for example, raise the manure spreader 3 and then read out the weight of the spreader on the display screen. The user thus gets an indication of the quantity of manure which has been spread on the land from the spreader 3 in the interim. Wheels, on which pneumatic tyres 31 have been fitted, are mounted at a second end of the frame 35, on the right in the drawing.

The conveyor belt in the spreader 3 extends from the container 32 to a discharge end 37. Said discharge end 37 adjoins a chute 38. The chute guides the manure onto the land. The effects of wind and rain therefore have a limited influence on the spreading accuracy that can be achieved. In order to keep the installation 1 as lightweight as possible, the chute is, for example, made of sailcloth or a comparable material.

A metering roller 39 is positioned above the surface of the conveyor belt 33. The direction of rotation of this metering roller is opposite to the direction of rotation of the conveyor belt 33 itself. The quantity of manure which can be moved by the belt 33 in the direction of the chute 38 can be adjusted by adjusting the gap between the metering roller and the belt 33. In addition to the metering roller 39, a distributor roller 40 is also fitted. This roller is constructed as a brush and provides for uniform distribution of the manure in the direction of the chute 38.

The installation 1 preferably comprises means for measuring the distance travelled. By combining the measured values for the distance travelled and the decrease in the weight of the manure spreader it is possible accurately to calculate how much manure has been distributed on the land per square metre.

To enable the weight of the manure spreader to be kept as low as possible it is advantageous that the conveyor belt 33 is driven with the aid of the tyres 31. The effect of this measure is, inter alia, that the quantity of manure which is discharged is matched automatically, and without complex control means, to the speed of movement of the installation 1. Moreover, the supply of manure ceases automatically when the installation 1 is stopped.

The invention can advantageously be employed in agricultural, forestry and horticultural concerns and in flower cultivation where crops are grown and animals are kept at the same time. The application of fertilisers to the land is desirable for the cultivation of the crops. The animals, such as chickens, pigs or cows, will themselves produce manure.

In accordance with existing and future legislation, every agricultural concern in the Netherlands must keep records of the substances bought in by the farm and the substances which subsequently leave the farm. These records are mandatory in order to be able to establish how many substances, such as nitrogen and phosphorus, an agricultural concern introduces into the environment. In other words: by means of the records the environmental pollution caused by an arable farming, horticultural, forestry or flower cultivation concern can be established. If a farmer exceeds the maximum permitted levels, an environmental tax must be paid in respect of this.

If a farmer keeps chickens and cultivates potatoes, the farmer will purchase young chickens, feed for those chickens, seed and artificial fertiliser. This farmer's output comprises the chickens bred, manure produced by the chickens, waste from chickens which have died and the yield from the potato harvest.

As has been stated, the legislation also imposes a maximum on the quantity of fertilisers which may be applied to the land. A payment must be made in respect of any amounts in excess of these maxima. Furthermore, any surplus manure must be removed and despatched to an incinerator or another processing installation. Costs are associated with this as well.

If, as is customary according to the state of the art, the manure is distributed over the land in the autumn, a significant proportion of the nutrients supplied to the land will leach out and will not contribute to an improvement in the yields from the land. As a consequence of the environmental legislation discussed above, an environmental tax does have to be paid in respect of the nutrients leached out, such as, for example, nitrogen. As a result of the leaching out of the manure, a farmer must, on the one hand, buy in manure, whilst he also has to pay a penalty for the proportion leached out. A farmer can save on these two items of expenditure by making use of the invention. By distributing the manure in the spring the manure is better utilised, so that less manure has to be bought in. Secondly, the environmental tax costs will fall.

The advantages of the method can be seen, inter alia, from the following calculation example for nitrogen.

20 tonne manure per hectare is distributed over the land. Approximately 40 kg nitrogen is applied to the land per tonne manure. This is equivalent to 800 kg nitrogen per hectare.

According to the state of the art the manure is distributed in August. After the manure has been distributed a so-called 'catch crop' is planted on the land. This catch crop takes up valuable nutrients, such as nitrogen, from the soil. The catch crop is then ploughed into the land in the autumn. This catch crop thus provides for an improvement in the structure of the soil. Assume that the catch crop has taken up a total of 100 kg nitrogen.

For the cultivation of potatoes it is necessary to apply 300 kg nitrogen per hectare to the land. 100 kg has already been taken up in the land with the aid of the catch crop. Thus, an additional 200 kg must be applied. These 200 kg must be bought in by a farmer. In total, therefore, 800 plus 200, that is to say 1000 kg, nitrogen per hectare is applied to the land by the farmer. Of this 1000 kg nitrogen approximately 175 kg is taken up in the potatoes and this 175 kg is removed when the potatoes are lifted. In total, 825 kg is thus applied to the land. In 2001 the statutory standard for losses which may be applied to the land will be 175 kg per hectare. Thus, in total 825 kg minus 175 kg, that is to say 650 kg, too much nitrogen has been applied to the land. A levy must be paid in respect of each kilo above the permitted maximum that is applied to the land. This levy is NLG 1.50 per kilogram. Thus, in total 650 times NLG 1.50, that is to say NLG 975, in levies must be paid per hectare.

By now, according to the invention, distributing manure only in the spring, the manure will be able to leach out to a far lesser extent. A far greater proportion of the substances from the manure can be utilised by the planted crop. In the calculation example it is possible, for example, when spreading to make do with, for example, 10 tonnes manure per hectare, or in other words to apply 400 kg nitrogen to the land. In view of the fact that this nitrogen is introduced into the land at a relatively shallow depth and the nitrogen can easily be converted under the action of heat into substances which can be taken up by plants, it can be assumed that 65 % of the 400 kg, that is to say 260 kg, nitrogen can be taken up directly by the crop. In addition, for example, 50 kg nitrogen is applied with the aid of artificial fertiliser. Thus, in total 450 kg nitrogen per hectare is applied. 15 % of this quantity of nitrogen will be converted into absorbable substances in the ground during the growing season. This proportion is taken up by the catch crop that is planted on the land in the autumn. Moreover, 10 % of the nitrogen introduced into the ground is taken up by the soil life, such as, for example, worms and other animals which are active in the ground. This soil life is far more active in summer than in winter because the soil temperature is higher. Altogether approximately 90 % of the nitrogen is utilised either by the crop or by the catch crop or by the soil life. The other 10 % is leached out. This thus amounts to a total of 10 % of 450 kg, that is to say 45 kg, being leached out.

The system according to the state of the art can now be compared with the system according to the invention. Instead of 650 kg (prior art), 45 kg (invention) is now fed into the surface water and groundwater. This thus signifies a saving of 605 kg nitrogen per hectare. It is clear that this results in an enormous reduction in environmental pollution.

The term "making ready for sowing" is used several times in this text. In this text the term "making ready for sowing" is understood to mean that the top layer of the soil is ploughed, so that seed can be sown in the ground at a shallow depth.

## Claims

1. Installation (1) for spreading manure over the ground, comprising a vehicle (2), such as a tractor, and a manure spreader (3) provided with a container (32) for manure and means (33) for transporting the manure, characterised in that the installation (1) is provided with wheels (21, 22, 31) over its entire width, the various features being such that the installation (1), in use, exerts a uniform pressure on the soil.

2. Installation (1) according to Claim 1, characterised in that the manure spreader (3) is provided with a chassis with wheels (31), the wheels of the manure spreader (3), when viewed in the longitudinal direction of the installation, being positioned between the wheels (21, 22) of the vehicle.

3. Installation (1) according to Claim 1 or 2, characterised in that the manure spreader (3) is connected to the vehicle (2) with the aid of lifting means (5).

4. Installation (1) according to Claim 1, 2 or 3, characterised in that the installation (1) comprises means (36) for determining the weight of the manure spreader (3).

5. Installation (1) according to Claim 4, characterised in that the weighing means (36) are housed in the lifting means (5).

6. Installation (1) according to one of the preceding claims, characterised in that the installation (1) is provided with means for determining the distance travelled.

7. Installation (1) according to one of the preceding claims, characterised in that the means for transporting the manure comprise a conveyor belt (33) which extends from a take-up end, which is located in the container for the manure, to a discharge end (37).

8. Installation (1) according to Claim 7, characterised in that the conveyor belt (33) extends over essentially the entire width of the manure spreader (3).

9. Installation (1) according to Claim 7 or 8, characterised in that the discharge end (37) of the conveyor belt (33) adjoins a chute (38).

10. Installation (1) according to one of Claims 7 - 9, characterised in that the installation (1) includes a metering roller (39), which is positioned close to the conveyor belt (33), the distance between the metering roller (39) and the surface of the conveyor belt (33) being adjustable.

11. Installation (1) according to one of the preceding claims, characterised in that the installation (1) includes means (4) for making the soil ready for sowing, which means (4), viewed in the direction of travel of the vehicle (2), are located downstream of the manure spreader (3).

12. Method for spreading manure over arable land with the aid of an installation according to one of the preceding claims, characterised in that the arable land is essentially uniformly loaded during spreading of the manure.

13. Method according to Claim 12, characterised in that the manure is spread over the arable land while making the arable land ready for sowing.
